# EUROPÄISCHE PATENTSCHRIFT

(11) **EP 1 284 170 B1**
(45) Veröffentlichungstag und Bekanntmachung des Hinweises auf die Patenterteilung: **14.05.2008**
(21) Anmeldenummer: 02017872.9
(22) Anmeldetag: 08.08.2002
(51) Int. Cl.: B23P 15/00, B23P 13/02, B23C 3/14, B21C 5/00

(54) **Verfahren und Vorrichtung zur Herstellung von Stahlprofilen für Linearführungselemente**
Method and device for manufacturing steel profiled rods for linear motion guide elements
Procédé et dispositif de fabrication des barres profilées pour éléments de guidage linéaire

(30) Priorität: 16.08.2001 DE 10140307
(43) Veröffentlichungstag der Anmeldung: 19.02.2003
(73) Patentinhaber: Hoesch Schwerter Profile GmbH, 58239 Schwerte (DE)
(72) Erfinder: Pleugel, Lothar, Dr.-Ing., 58640 Iserloh (DE)
(74) Vertreter: Christophersen & Partner

(56) Entgegenhaltungen:
- DE-A- 19 621 536
- DE-A- 19 725 760
- GREULICH U: "DAS ZIEHEN VON SONDERPROFILEN AUS STAHL" DRAHTWELT, VOGEL, WUERZBURG,, DE, Bd. 47, Nr. 7, Juli 1961 (1961-07), Seiten 579-583, XP008007925

## Beschreibung

Die Erfindung betrifft ein Verfahren zur Herstellung von Stahlprofilstäben für Linearführungselemente gemäß dem Oberbegriff des Anspruchs 1 sowie Vorrichtungen zur Durchführung des Verfahrens.

Ein solches Verfahren sowie eine Vorrichtung zur Durchführung dieses Verfahrens sind aus dem nächstliegenden Stand der Technik DE 19 621 536 C2 bekannt.

In der DE 196 21 536 C2 sind ein Verfahren und eine Vorrichtung zur Herstellung von Stahlprofilen, insbesondere von präzisen stabförmigen Führungselementen für translatorische Bewegungen beschrieben, die im wesentlichen zur wirtschaftlichen Herstellung von Linearführungselementen für den Werkzeugmaschinenbau und für Robotik- und Handhabungseinrichtungen dienen.

Das Verfahren nach DE 196 21 536 C2 zeichnet sich dadurch aus, daß zwischen der Warmumformstufe und der Kaltformgebung der Profile eine spanabhebende profilierende Bearbeitungsstufe vorgesehen ist, die entkohlte Randzonen in den Funktionsbereichen der Profile beseitigt und profilierend wirkt. Die Beschreibung der zugehörigen Vorrichtung umfaßt die Ausgestaltung und Anordnung der erforderlichen Führungs- Transport- und Halteelemente sowie die Bearbeitungsstationen entsprechend der Aufgabenstellung.

Wenn die Stufe der Kaltformgebung gemäß DE 196 21 536 C2 durch einen Stab- Ziehprozeß realisiert wird, so ist mit diesem Verfahrensschritt stets das Einführen des einen Endes des Profilstabs in die maßlich engere Ziehmatrize verbunden. Der Profilstab muß in die Öffnung der Ziehmatrize eingeführt und so weit durch diese hindurchgeschoben werden, bis ein zweckmäßig langes Profilstück aus dem Auslaufbereich der Ziehmatrize herausragt, um ein sicheres Greifen des Profilstabs durch den Ziehwagen der Ziehbank zu gewährleisten.

Nach dem derzeitigen Stand der Technik wird der Einführ- und Durchsteckprozeß Profilstab/ Ziehmatrize in der Ziehereiindustrie mittels zweier Methoden bewerkstelligt. Entweder wird der Profilstab ohne eine weitere Stabbehandlung nach der Einstoßmethode unter (Druck-) Kraftaufwendung um den erforderlichen Wegbetrag (ca. 200 ... 300 mm) hydraulisch durch die Ziehmatrizenöffnung hindurchgestoßen, oder das eine Ende des Profilstabs wird nach einer bestimmten Systematik "verjüngt", d. h. maßlich verringert, um so eine Ziehangel zu schaffen. In letzterem Fall kommt die Methode des Anspitzens zur Anwendung.

Bei der Einstoßmethode, die, wie erwähnt, keiner besonderen Stabvorbereitung bedarf und somit zunächst einmal als betriebswirtschaftlich vorteilhafter erscheint, wird jedoch die Ziehmatrize stark mechanisch belastet; fallweise kann dies bis zur Überbeanspruchung der Matrize führen. Zum einen bewirkt das einzustoßende Profilstabende durch die Kanten seines Stirnflächenbereichs eine erhebliche Flächenpressung und Generierung von hohen Zugspannungen im Werkzeug und zum anderen kann während der Einstoßphase naturgemäß nur die von der Einstoßvorrichtung ausgeübte Druckkraft wirken. Die werkzeugentlastende Komponente der in Richtung Stablängsachse wirkenden Zugkraft, die während des eigentlichen Ziehprozesses auftritt, fehlt naturgemäß beim Einstoßen. Wegen dieses ungünstigen Spannungszustands im Umformbereich der Ziehmatrize, liegen die erforderlichen Einstoßkräfte (Druckkräfte) deutlich über den ausschließend aufzubringenden Ziehkräften (Zugkräfte). Beim Einstoßen eines Profilstabs ist zudem die geometriedominierte Randbedingung zu beachten, daß das einzustoßende Stabende die Einstoß- Druckkraft zu übertragen vermag, ohne auszuknicken (Eulersche Knickformel).

Die Anspitzmethode, siehe hierzu beispielsweise U. Greulich, "Das Ziehen von Sonderprofilen aus Stahl", Draht - Welt 1961, Heft 7, S. 579 / 583, hat das Ziel, das in die Ziehmatrize einzufädelnde Stabende auf einer Länge von ca. 200 ... 300 mm durch unterschiedliche Verfahrensweisen (Anspitzverfahren) so in seinem Querschnitt zu reduzieren, daß es kraftlos durch die Matrizenöffnung hindurchgesteckt und im Austrittsbereich der Matrize durch die Stab- Klemmvorrichtung des Ziehwagens der Ziehbank zur Einleitung des eigentlichen Ziehprozesses gefaßt werden kann.

Die in der Ziehereiindustrie angewendeten Anspitzverfahren können in Warmumformverfahren, Kaltumformverfahren, spanende Verfahren und chemisch abtragende Verfahren unterteilt werden. Bei der Erstellung der im wesentlichen konisch ausgebildeten Ziehangel ist darauf zu achten, daß diese zwar problemlos durch die Matrizenöffnung hindurchgesteckt werden kann, daß aber andererseits keine unzulässige Querschnittsschwächung erfolgt, die zum Abriß während des Ziehens führt. Zudem ist im Falle einer durch Warmhämmern oder Warmwalzen erzeugten Ziehangel dafür zu sorgen, daß legierte, zur "Aufhärtung" neigende Stahl- Profilstäbe einer anschließenden Glühbehandlung zur Reduzierung der Bruchgefahr unterzogen werden.

Generell gilt, daß das Anbringen von Ziehangeln bei einfachen Stabquerschnitten wie z. B. bei Flachstählen und verwandten Formen oder bei runden und rundähnlichen Querschnitten technisch gesehen relativ unproblematisch zu realisieren ist.

Spezialprofile hingegen mit ihrem z. T. sehr komplexen Querschnittsformen verschließen sich meist den einfach zu handhabenden Anspitzoperationen.

Beim Anspitzen von Spezialprofilen ist häufig die Kombination mehrerer Anspitzverfahren notwendig. Zudem muß aus Komplexitätsgründen auf Ziehangelquerschnittsformen zurückgegriffen werden, die in ihren unterschiedlichen Bereichen deutliche geometrische Vereinfachungen in Richtung "rund" oder "eckig" aufweisen. Eine gleichmäßige Verjüngung der originären Stabform ist aufgrund der zur Verfügung stehenden Verfahrenspalette betriebswirtschaftlich nicht sinnvoll darstellbar.

Neben der Vermeidung unzulässiger Querschnittsschwächung und Aufhärtung im Ziehangelbereich ist bei Spezialprofilen zudem strikt zu beachten, daß keine unzulässigen Materialanhäufungen und abrupte Querschnittsübergänge im Grenzbereich zwischen Ziehangel und originärem Stabquerschnitt entstehen. Wird diese Regel mißachtet, kann es leicht zu einer Beschädigung oder Beeinträchtigung des Ziehwerkzeugs kommen.

Entsprechend dem heutigen Stand der Technik beim Stabziehen stellt das Anspitzen (Anbringen einer Ziehangel) neben den anderen vorbereitenden Schritten "Wärmebehandlung", "Entzundern" und "Haft-/ Gleitmittelauftrag" eine zusätzliche, eigenständige Arbeitsoperation zur Vorbereitung des Ziehprozesses dar. Aus diesem Grunde schlägt die Anspitzoperation, die fallweise länger dauern kann als der später folgende eigentliche Ziehprozeß, als deutlicher Kostenfaktor bei der betriebswirtschaftlichen Gesamtrechnung des Profilherstellungsprozesses zu Buche und erzeugt zudem zusätzliche logistische Aufwendungen, welche die Prozeß- Durchlaufdauer erhöhen.

Auf der Basis des skizzierten Standes der Technik liegt der Erfindung die Aufgabe zugrunde, im Rahmen der Herstellung von Stahl- Spezialprofilen für die Linearführungsindustrie gemäß der DE 196 21 536 C2 eine Verfahrensweise nebst Vorrichtungen bereitzustellen, die es ohne wesentlichen Zeitverlust erlauben, die einzelnen Spezialprofilstäbe kostengünstig mit Ziehangeln von ausreichender Fertigungsqualität und profilstabähnlichem Querschnitt zu versehen.

Gelöst wird die Aufgabe durch die Merkmale der Patentansprüche 1 und 4 bis 7.

Vorteihafte Ausgestaltungen ergeben sich aus den jeweiligen Unteransprüchen.

In den Ansprüchen 4 bis 9 sind zweckmäßige und vorteilhafte Ausbildungen von Vorrichtungen zur Durchführung des Verfahrens nach den Ansprüchen 1 bis 3 angegeben.

Mittels des erfindungsgemäßen Verfahrens und der Vorrichtungen können gegenüber dem heutigen Stand der Technik bei der Herstellung von Spezialprofilen für die Linearführungsindustrie Vorteile verfahrenstechnischer Natur und Vorteile auf dem Gebiet der Werkzeugtechnik erreicht werden. Bei dem Verfahren nach der DE 196 21 536 C2, welches die spanabhebende formgebende Bearbeitung von Spezialprofilstäben zwischen den Fertigungsstufen Warmformgebung und Kaltformgebung beschreibt, kann nach dem erfindungsgemäßen Gedanken, beim Durchlaufen der Profilstäbe durch die spanabhebende Vorrichtung die örtliche Spanabnahme an einem Stabende so gesteuert werden, daß durch verstärkten Materialabtrag eine etwa 200 ... 300 mm lange Ziehangel entsteht. Die Ziehangelherstellung wird somit ohne wesentlichen Mehraufwand in die Fertigungsstufe der spanabhebenden formgebenden Bearbeitung des Profilstabs integrierbar.

Dieser verfahrenstechnische Vorteil gegenüber der Ziehangelherstellung gemäß heutigem Stand der Technik generiert gleichzeitig einen werkzeugtechnischen Vorteil. Die zum Spanabtrag auf den Profilstabmantelflächen benutzten Formmesser können ohne jede Veränderung auch für den Ziehangelbereich eingesetzt werden; zusätzliche Werkzeugkosten sind dadurch reduzierbar bzw. vermeidbar.

Die Integration der Ziehangelfertigung in die Fertigungsstufe der spanenden Formgebung der Profilstäbe entsprechend der vorliegenden Aufgabenstellung ist durch zwei Verfahrens- und Vorrichtungskonzeptionen zu erreichen:
a) Wird entsprechend Anspruch 4 der DE 196 21 536 C2 zur Realisierung der Fertigungsstufe der spanenden Formgebung eine Hochleistungsfräsanlage benutzt, so können Ziehangeln dadurch erzeugt werden, daß die Konturfrässcheiben definiert während des Stabdurchlaufs in Richtung Stabmitte verfahren werden und anschließend wieder in ihre ursprüngliche Position zurückkehren. Dadurch wird das eine Stabende auf einer vorbestimmten Länge von 200 ... 300 mm dünner gefräßt als der Hauptteil der Stablänge. Das Anstellen der Konturfrässcheiben erfolgt vorzugsweise durch NC-Achsen. Auf diese Weise entsteht eine "halbe" Ziehangel, weil lediglich zwei einander gegenüberliegende Profilflächen zusätzlich spanabhebend bearbeitet werden. Der Effekt dieser Maßnahme ist, daß zwar noch nicht auf die Einstoßvorrichtung beim Ziehprozeß verzichtet werden kann, die erforderlichen Einstoßkräfte aber deutlich verringert werden. Diese Einstoßkraftreduzierung und die Konzentration der zusätzlichen Zerspanung auf die beiden stark profilierten Seitenflächen des Profilstabs, die ihre Entsprechung in den filigraner ausgebildeten Ziehmatrizenpartien finden, führen bereits zu einer merklichen Schonung, das heißt Standzeiterhöhung der teuren Ziehmatrize und macht insbesondere verkettete Fertigungsabläufe mit möglichen Konsekutivstörungen stabiler.
   Wird die Hochleistungsfräsanlage um zwei Konturfrässcheiben erweitert, so können auch die beiden restlichen ebenfalls einander gegenüberliegenden Profilflächen spanabhebend bearbeitet werden. Durch diese Maßnahme entsteht nunmehr eine vollwertige Ziehangel, die bei entsprechender maßlicher Ausgestaltung ohne Widerstand, d. h. kraftlos, durch die Öffnung der Ziehmatrize hindurchgesteckt werden kann. Auch dieses zweite Konturfrässcheibenpaar wird vorzugsweise als über NC-Achsen anstellbar ausgeführt. Durch das zweckmäßige koordinierte Anstellen aller 4 NC-Achsen der Konturfrässcheiben läßt sich ein Verfahrensalgorithmus realisieren, mittels dem der durch die Hochleistungsfräsanlage hindurchlaufende Profilstab partiell zusätzlich spanend bearbeitet werden kann. Auf relativ einfache Weise lassen sich somit das Konturfräsen entsprechend der DE 196 21 536 C2 und das Ziehangelfräsen entsprechend dem erfinderischen Gedanken als neuer integrierter Prozeß mit deutlichen Kostenvorteilen darstellen.
b) Alternativ zu der unter a) skizzierten Verfahrensweise können eine "halbe" Ziehangel oder eine vollwertige Ziehangel auch dadurch erreicht werden, daß der durch die Hochleistungsfräsanlage hindurchgelaufene Profilstab im Auslaufbereich derselben quergetaktet und wahlweise einer oder zwei zusätzlichen speziellen Frässtationen zugeführt wird.

Wird der Stab lediglich in eine Frässtation eingeführt, so kann durch das Abfräsen eines definierten Bereichs seines einen Endes in Form von Fräsen zweier paralleler Flächen eine "halbe" Ziehangel mit den bereits unter a) beschriebenen Kriterien erzeugt werden.

Wird der Stab zusätzlich noch in eine zweite Frässtation eingeführt, deren Werkzeuge um 90° versetzt zur ersten angeordnet sind, können auch die restlichen beiden, einander gegenüberliegenden Profilstabflächen bearbeitet werden, was zu einer vollwertigen Ziehangel führt.

Diese Alternative b) hat den Vorteil, daß auf die Installation von NC-Achsen in der Hochleistungsfräsmaschine verzichtet werden kann. Die von der Hochleistungsfräsmaschine vorgegebene Profilstabpositionierung und der Auslaufbereich der Maschine können voll genutzt werden. Ferner ist es möglich, stumpfe Formmesser, die für die Verfahrensweise nach DE 196 21 536 C2 nicht mehr verwendbar sind, für das Ziehangelfräsen noch zu nutzen, da die Profilstaboberflächenrauheit im Ziehangelbereich von völlig untergeordneter Bedeutung ist.

Die beiden Frässtationen nach Variante b) benötigen keine NC-Achsen, da sie pro Profilstabtyp mit Festanstellungen der Fräswerkzeuge arbeiten können.

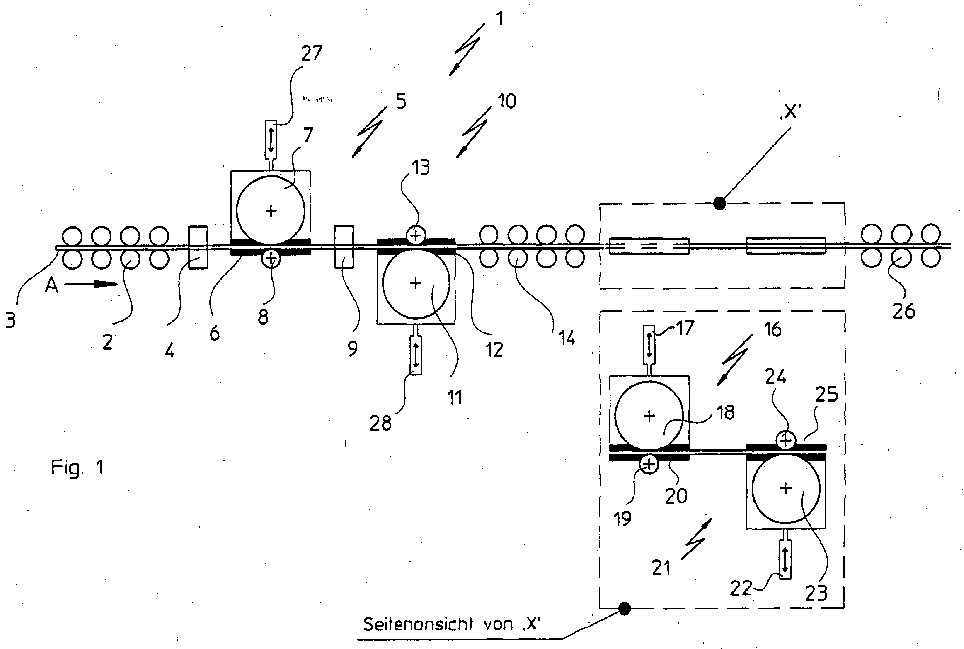

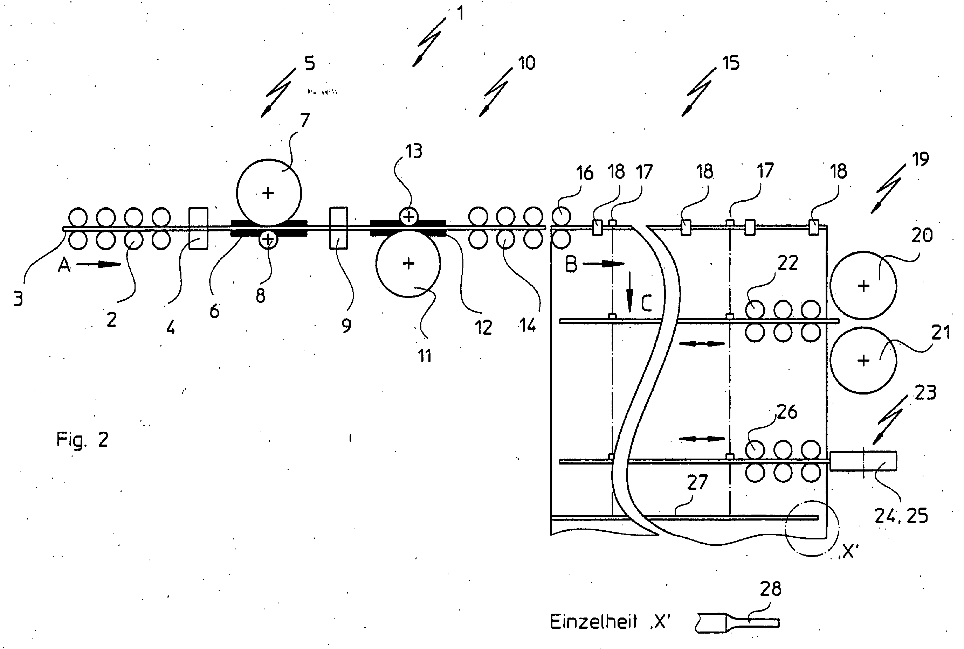

Die unter a) und b) genannten Verfahrenskriterien für das Erstellen von "halben" und vollwertigen Ziehangeln bei Spezialprofilstäben für Linearführungen können entsprechend dem erfindungsgemäßen Verfahren und durch die in den Ansprüchen 4 bis 7 angegebenen Vorrichtungen, die zweckdienliche Fräseinrichtungen beinhalten, realisiert werden.
Die entsprechenden Vorrichtungen werden anhand der beigefügten Zeichnungen **Fig. 1** und **Fig. 2** näher erläutert.

Die **Fig. 1** zeigt die Hochleistungsfräsanlage **1** mit Zuführ- und Positioniervorrichtung **2,** erster Profilmeßvorrichtung **4,** zweiter Profilmeßvorrichtung **9,** Auszieh- und Zuführvorrichtung **14,** zweiter Ausziehvorrichtung **26.** Der von der Position A → kommende, in die Hochleistungsfräsanlage einlaufende Profilstab **3** erreicht zuerst die erste Bearbeitungsstation **5** mit ihrer Konturfrässcheibe **7**, dem Gegenhalter **8**, der Zwangsführung **6** und der NC-Achse **27**. Während des Passierens der Bearbeitungsstation **5** wird die Konturfrässcheibe **7** durch die NC-Achse **27** so angestellt, daß die der Konturfrässcheibe **7** zugewandte Profilstabseite auf einer ca. 200 ... 300 mm betragenden Länge entsprechend den maßlichen Vorgaben abgefräßt wird. Nach Durchfahren dieser 200 ... 300 mm betragenden Stablänge stellt die NC-Achse **27** die Konturfrässcheibe **7** in jene Position zurück, die zur Einstellung des Profilstabbreitenmaßes im gefrästen Zustand notwendig ist. Erreicht das nun einseitig gefräste Profilstabende die Bearbeitungsstation **10** mit Gegenhalter **13** und Zwangsführung **12**, wird die Konturfrässcheibe **11** durch die NC-Achse **28** definiert gegen die zweite Seite des Profilstabs **3** angestellt, so daß im besagten Stabendenbereich von 200 ... 300 mm nun dieser zweite Teil der Zerspanungsarbeit geleistet werden kann. Nach Durchfahren des 200 ... 300 mm - Weges stellt die NC-Achse **28** die Konturfrässcheibe **11** in jene Position zurück, die zur Erreichung des nunmehr endgültigen Profilbreitenmaßes im gefrästen Zustand notwendig ist. Mittels vorstehend genannter Vorrichtungen ist somit eine "halbe" Ziehangel realisierbar.

Eine vollwertige Ziehangel wird dadurch erzielt, daß der besagte Profilstab **3** weiter durch die Hochleistungsfräsanlage **1** in Richtung der Bearbeitungsstationen **16** und **21** geführt wird. Erreicht das eine Ende des Profilstabs **3** die Bearbeitungsstation **16** mit der Konturfrässcheibe **18**, Gegenhalter **19** und Zwangsführung **20**, fährt die NC-Achse **17** die Konturfrässcheibe **18** definiert in Richtung der der Konturfrässcheibe **18** zugewandten Profilstaboberfläche und spant eine 200 ... 300 mm lange Strecke ab. Danach zieht die NC-Achse **17** die Konturfrässcheibe **18** in ihre Ausgangslage zurück.
Erreicht das eine Ende des Profilstabs **3** die Bearbeitungsstation **21** mit ihrer Konturfrässcheibe **23**, dem Gegenhalter **24**, der Zwangsführung **25** und der NC-Achse **22**, erfolgt nun in ähnlicher Weise wie beim Durchfahren der vorerwähnten Bearbeitungsstation **16** durch Anstellen der NC-Achse **22** die Abspanung des der Konturfrässcheibe **23** zugewandten Profilstabbereichs auf einer Länge von 200 ... 300 mm. Nach Ablauf dieser Bearbeitungsoperation ist nunmehr eine vollwertige Ziehangel an dem Profilstab **3** entstanden.

Die Fig. 2 gibt die Vorrichtung gemäß dem unter b) beschriebenen Verfahren wieder. Die Hochleistungsfräsanlage **1** ist um die Ziehangelfräsanlage **15** erweitert worden. Der aus der Hochleistungsfräsanlage **1** austretende Profilstab **3**, dessen beide Konturflächen durch die Konturfrässcheiben **7** und **11** der Bearbeitungsstationen **5** und **10** spanabhebend bearbeitet werden, wird von der Zuführungsvorrichtung **14** und dem Rollgang **38** in Richtung B → in die Ziehangelfräsanlage **15** hineintransportiert. Die Querfördereinrichtung **37** der Ziehangelfräsanlage **15** taktet den Profilstab **3** in Richtung C → bis auf die Höhe der Bearbeitungsebene der Horizontalfräseinheit **39** mit ihren Konturfrässcheiben **40** und **41**. Die Zuführ- und Positioniereinheit **42** fasst den Profilstab und führt ihn positioniert um einen Wegebetrag von 200 ... 300 mm in die Bearbeitungsebene zwischen die maßlich entsprechend eingestellten Konturfrässcheiben **40** und **41** ein. Nach Ausführen der Fräsoperation unter Benutzung desselben Formmessertyps wie bei den Konturfrässcheiben **7** und **11** verwendet, wird der Profilstab durch die Zuführ- und Positioniereinheit **42** definiert zurückgezogen und durch die Querfördereinheit **37** der Bearbeitungsebene der Vertikalfräseinheit **43** zugeführt. Die Zuführ- und Positioniereinheit **46** treibt nun den Profilstab in die Fräsebene zwischen den vertikalen Konturfrässcheiben **44** und **45** zur Ausführung der wiederum einen Weg von 200 ... 300 mm beinhaltenden Fräsaufgabe. Der nunmehr mit einer vollwertigen Ziehangel **48** versehene Profilstab **47** (identisch mit Profilstab 3) kann im weiteren der nächsten Verarbeitungsstufe (in Fig. 2 nicht dargestellt) zugeführt werden.

Wird die Ziehangelfräsanlage **15** lediglich mit der Horizontalfräseinheit **39** bestückt, so kann nur eine "halbe" Ziehangel erzeugt werden, da nur zwei einander gegenüberliegende Profilstabflächen zusätzlich fräsend bearbeitet werden können.

Die Arbeitstakte im Bereich der Ziehangelfräsanlage **15** müssen so abgestimmt werden, daß die Durchsatzleistungen der vorgeschalteten verketteten Bearbeitungsstationen **5** und **10** nicht beeinträchtigt werden.

Prinzipiell ist es auch möglich, die Ziehangelfräsanlage **15** vor die Bearbeitungsstationen **5** und **10** bzw. vor die Zuführ- und Positioniervorrichtung **2** zu positionieren. Die Vorteile der Beibehaltung der richtigen Profilstabpositionierung und die weitere Verwendung abgestumpfter Formmesser der Konturfrässcheiben **7** und **11** bleiben dadurch unverändert.

## Patentansprüche

1. Verfahren zur Herstellung von Stahlprofilstäben für Linearführungselemente durch die Kombination von Warmformgebung und anschließender Kaltformgebung, wobei zwischen den Fertigungsstufen Warmformgebung und Kaltformgebung eine spanabhebende formgebende Bearbeitungsstufe vorgesehen ist, **dadurch gekennzeichnet, dass** im Rahmen des Fertigungsschritts spanabhebende formgebende Bearbeitungsstufe eine integrierte Ziehangelerstellung an den Profilstäben ausgeführt wird.

2. Verfahren nach Anspruch 1, **dadurch gekennzeichnet, dass** durch partielle spanende Bearbeitung zweier einander gegenüberliegender Profilstabflächen im Bereich des einen Profilstabendes eine "halbe" Ziehangel an den Profilstab angearbeitet wird.

3. Verfahren nach Anspruch 1, **dadurch gekennzeichnet, dass** durch partielle spanende Bearbeitung von zwei mal zwei einander gegenüberliegender Profilstabflächen im selben Bereich des einen Profilstabendes eine vollwertige Ziehangel an den Profilstab angearbeitet wird.

4. Vorrichtung zur Durchführung des Verfahrens nach Anspruch 2, **dadurch gekennzeichnet, dass** für den Fertigungsschritt der spanabhebenden formgebenden Bearbeitung eine Hochleistungsfräsanlage **(1)** mit zwei versetzt gegenüberliegenden, mit NC-Achsen **(27, 28)** versehene Konturfrässcheiben **(7, 11)** angeordnet ist, wobei eine längendefinierte Strecke des einen, in die Hochleistungsfräsanlage (1) einlaufenden Stabendes durch koordiniertes Anstellen der Konturfrässcheiben **(7, 11)** über die zugeordneten NC-Achsen (27, 28), dünner gefräst wird, als der übrige Profilstablängenbereich.

5. Vorrichtung zur Durchführung des Verfahrens nach Anspruch 3, **dadurch gekennzeichnet, dass** für den Fertigungsschritt der spanabhebenden formgebenden Bearbeitung eine Hochleistungsfräsanlage **(1)** mit zwei mal zwei versetzt gegenüberliegenden, in Horizontal- und Vertikalrichtung angeordneten, mit NC-Achse **(27, 28, 17, 22)** versehenen Konturfrässcheiben **(7** und **11, 18** und **23)** angeordnet ist, wobei eine längendefinierte Strecke des einen in die Hochleistungsfräsanlage einlaufenden Stabendes durch koordiniertes Anstellen der Konturfrässcheiben, **(7, 11, 18, 23)** über die zugeordneten NC-Achsen **(27, 28, 17, 22)** dünner gefräst wird als es den Maßen des übrigen Profilstablängenbereichs entspricht.

6. Vorrichtung zur Durchführung des Verfahrens nach Anspruch 2, **dadurch gekennzeichnet, dass** für den Fertigungsschritt der spanabhebenden formgebenden Bearbeitung eine Hochleistungsfräsanlage (1), die zwei Bearbeitungsstationen (5, 10) mit Konturfrässcheiben (7, 11) aufweist, mit integrierter Ziehangelfräsanlage (15) die eine Horizontalfräseinheit (39) aufweist, angeordnet wird, wobei zwei fest positionierte einander gegenüberliegende horizontale Konturfrässcheiben (40, 41) der Horizontalfräseinheit (39) das eine Ende des von der Hochleistungsfräsanlage kommenden, quer in eine Positioniereinheit (42) hineingeförderten Profilstabs, innerhalb eines durch die Positioniereinheit (42) vorgebbaren Längenbereichs dünner fräsen.

7. Vorrichtung zur Durchführung des Verfahrens nach Anspruch 3, **dadurch gekennzeichnet, dass** für den Fertigungsabschnitt der spanabhebenden formgebenden Bearbeitung eine Hochleistungsfräsanlage (1) und zusätzlich eine Horizontalfräseinheit (39) mit zwei fest positionierten horizontalen Konturfrässcheiben (40, 41) und eine Vertikalfräseinheit (43) mit zwei übereinander angeordneten fest positionierten vertikalen Konturfrässcheiben (44, 45) und eine Positioniereinheit (46) angeordnet ist, um zusätzlich das eine Ende des Profilstabs in einer um 90° versetzten Ebene zur Darstellung einer vollwertigen Ziehangel abzufräsen.

8. Vorrichtung nach Anspruch 6, **dadurch gekennzeichnet, dass** die horizontale Konturfrässcheiben (40, 41) der Horizontalfräseinheit (39) dieselben Formmesser verwenden wie die horizontale Konturfrässcheiben (7, 11) der Bearbeitungsstationen (5 und 10) der Hochleistungsfräsanlage (1).

## Claims

1. Method for producing steel profile rods for linear guide elements through the combination of hot forming and subsequent cold forming, wherein a shaping machining stage is provided between the manufacturing stages of hot forming and cold forming, **characterised in that** an integrated creation of drawing points is carried out on the profile rods during the manufacturing step of the shaping machining stage.

2. Method according to claim 1, **characterised in that** a "half" drawing point is formed on the profile rod by partial machining of two opposite profile rod surfaces in the region of one profile rod end.

3. Method according to claim 1, **characterised in that** a full drawing point is formed on the profile rod by partial machining of two times two opposite profile rod surfaces in the same region of one profile rod end.

4. Device for carrying out the method according to claim 2, **characterised in that** a high-power milling installation (1) comprising two contour milling discs (7, 11) arranged offset opposite one another and having NC axes (27, 28) is provided for the manufacturing step of shaping machining, wherein a length-defined section of one rod end running into the high-power milling installation (1) is milled thinner than the rest of the profile rod length region due to coordinated engagement of the contour milling discs (7, 11) via the associated NC axes (27, 28).

5. Device for carrying out the method according to claim 3, **characterised in that** a high-power milling installation (1) comprising two times two contour milling discs (7 and 11, 18 and 23) arranged offset opposite one another in the horizontal and vertical direction and having NC axes (27, 28, 17, 22) is provided for the manufacturing step of shaping machining, wherein a length-defined section of one rod end running into the high-power milling installation is milled thinner than the dimensions of the rest of the profile rod length region due to coordinated engagement of the contour milling discs (7, 11, 18, 23) via the associated NC axes (27, 28, 17, 22).

6. Device for carrying out the method according to claim 2, **characterised in that** a high-power milling installation (1) which comprises two machining stations (5, 10) with contour milling discs (7, 11) and which has an integrated drawing point milling installation (15) with a horizontal milling unit (39) is provided for the manufacturing step of shaping machining, wherein two horizontal contour milling discs (40, 41) of the horizontal milling unit (39), which are arranged in a fixed position and lie opposite one another, mill one end of the profile rod thinner in a length region that can be predefined by a positioning unit (42), said profile rod coming from the high-power milling installation and being conveyed transversely into the positioning unit (42).

7. Device for carrying out the method according to claim 3, **characterised in that** a high-power milling installation (1) and additionally a horizontal milling unit (39) with two horizontal contour milling discs (40, 41) arranged in a fixed position and a vertical milling unit (43) with two vertical contour milling discs (44, 45) arranged in a fixed position one above the other and a positioning unit (46) is provided for the manufacturing step of shaping machining, so as additionally to mill one end of the profile rod in a plane shifted through 90° in order to form a full drawing point.

8. Device according to claim 6, **characterised in that** the horizontal contour milling discs (40, 41) of the horizontal milling unit (39) use the same forming blades as the horizontal contour milling discs (7, 11) of the machining stations (5 and 10) of the high-power milling installation (1) .

## Revendications

1. Procédé de fabrication de barres profilées d'acier pour éléments de guidage linéaire par la combinaison du façonnage à chaud suivi du façonnage à froid, une étape d'usinage de façonnage par enlèvement de copeaux étant prévue entre les étapes de fabrication façonnage à chaud et façonnage à froid, **caractérisé en ce que** dans le cadre de l'étape de fabrication consistant en un façonnage d'usinage par enlèvement de copeaux, une fabrication de soie d'étirage est réalisée sur les barres profilées.

2. Procédé selon la revendication 1, **caractérisé en ce qu'**une « demie » soie d'étirage est formée au niveau de la barre profilée dans la zone d'une des extrémités de la barre profilée par un usinage partiel par enlèvement de copeaux de deux surfaces de barres profilées opposées l'une à l'autre.

3. Procédé selon la revendication 1, **caractérisé en ce qu'**une soie d'étirage complète est formée au niveau de la barre profilée dans la même zone d'une des extrémités de la barre profilée par un usinage partiel par enlèvement de copeaux de deux surfaces de barres profilées opposées l'une à l'autre.

4. Dispositif de réalisation du procédé selon la revendication 2, **caractérisé en ce qu'**une installation de fraisage haute performance (1) avec deux disques de contournage (7, 11) opposés de manière décalée, munis d'axes à commande numérique (27, 28) est agencée pour l'étape de fabrication d'usinage de façonnage par enlèvement de copeaux, un parcours défini en longueur de l'une des extrémités de barre entrant dans l'installation de fraisage haute performance (1) étant fraisé à une épaisseur plus faible que le reste de la zone longitudinale de la barre profilée par une mise en place coordonnée des disques de contournage (7, 11) par le biais des axes à commande numérique (27, 28) associés.

5. Dispositif de réalisation du procédé selon la revendication 3, **caractérisé en ce qu'**une installation de fraisage haute performance (1) avec deux fois deux disques de contournage (7 et 11, 18 et 23) opposés de manière décalée, disposés dans le sens horizontal et vertical, munis d'axes à commande numérique (27, 28, 17, 22) est agencée pour l'étape de fabrication d'usinage de façonnage par enlèvement de copeaux, un parcours défini en longueur de l'une des extrémités de barre entrant dans l'installation de fraisage haute performance étant fraisé à une épaisseur plus faible que celle correspondant aux dimensions du reste de la zone longitudinale de la barre profilée par une mise en place coordonnée des disques de contournage (7, 11, 18, 23) par le biais des axes à commande numérique (27, 28, 17, 22) associés.

6. Dispositif de réalisation du procédé selon la revendication 2, **caractérisé en ce qu'**une installation de fraisage haute performance (1), qui présente deux stations d'usinage (5, 10) avec disques de contournage (7, 11), avec installation de fraisage de soie d'étirage (15) intégrée, qui présente une unité de fraisage horizontal (39), est agencée pour l'étape de fabrication d'usinage de façonnage par enlèvement de copeaux, deux disques de contournage (40, 41) horizontaux, opposés l'un à l'autre, à position fixe, de l'unité de fraisage horizontal (39), fraisant à une épaisseur plus faible l'une des extrémités de la barre profilée provenant de l'installation de fraisage haute performance, introduite transversalement dans une unité de positionnement (42), à l'intérieur d'une zone longitudinale pouvant être prédéfinie par l'unité de positionnement (42).

7. Dispositif de réalisation du procédé selon la revendication 3, **caractérisé en ce qu'**une installation de fraisage haute performance (1) et en plus une unité de fraisage horizontal (39) avec deux disques de contournage (40, 41) horizontaux à position fixe et une unité de fraisage vertical (43) avec deux disques de contournage (44, 45) verticaux superposés à position fixe et une unité de positionnement (46) sont agencés pour l'étape de fabrication d'usinage de façonnage par enlèvement de copeaux, pour fraiser en plus l'une des extrémités de la barre profilée dans un plan décalé de 90° par rapport à une représentation d'une soie d'étirage complète.

8. Dispositif selon la revendication 6, **caractérisé en ce que** les disques de contournage (40, 41) horizontaux de l'unité de fraisage horizontal (39) utilisent les mêmes lames de formage que les disques de contournage (7, 11) horizontaux des stations d'usinage (5 et 10) de l'installation de fraisage haute performance (1).
